Europäisches Patentamt

European Patent Office

Office européen des brevets

(19)

(11) Veröffentlichungsnummer: **0 388 713**

**A2**

(12) **EUROPÄISCHE PATENTANMELDUNG**

(21) Anmeldenummer: **90104387.7**

(22) Anmeldetag: **08.03.90**

(51) Int. Cl.⁵: **B32B 27/30, B32B 27/20**

(30) Priorität: **22.03.89 DE 3909351**

(43) Veröffentlichungstag der Anmeldung:
**26.09.90 Patentblatt 90/39**

(84) Benannte Vertragsstaaten:
**BE DE IT**

(71) Anmelder: **UNILEVER NV**
**Burgemeester s'Jacobplein 1 P.O. Box 760**
**NL-3000 DK Rotterdam(NL)**

(72) Erfinder: **Heinrich, Gerhard**
**Am Gänseanger 4**
**D-8551 Pretzfeld(DE)**
Erfinder: **Schledorn, Martin**
**Föhrenbergstrasse 7**
**D-8551 Kirchehrenbach(DE)**

(74) Vertreter: **Hutzelmann, Gerhard et al**
**Duracher Strasse 22**
**D-8960 Kempten(DE)**

(54) **Folienverbund.**

(57) Folienverbund zum Herstellen von ID-Karten die mit Laserstrahlen markierbar sind und bei denen zusätzlich zu dem Laserbild ein weiteres sogenanntes Negativbild erzeugt wird, wozu eine weitere PVC-Lage Aluminiumteilchen enthält, die vor ihrer Zugabe zum PVC in epoxiertem Sojabohnenöl angeteigt wurden.

EP 0 388 713 A2

## Folienverbund

Die Erfindung bezieht sich auf einen Folienverbund zum Herstellen von ID-Karten od.dgl., die mit Laserstrahlen markierbar sind.

Zu solchen Folienverbünden sind bereits mehrere Vorschläge gemacht worden, um die Fälschungssicherheit zu erhöhen.

Der Erfindung liegt die Aufgabe zugrunde, diese Fälschungssicherheit noch weiter zu verbessern.

Diese Aufgabe wird erfindungsgemäß dadurch gelöst, daß eine Lage des Folienverbundes aus PVC besteht und Aluminiumteilchen enthält, die vor ihrer Zugabe zum PVC in epoxiertem Sojabohnenöl angeteigt sind.

Beim Auftreffen der Laserstrahlen auf diese Lage tritt eine ins Hellere gehende Verfärbung ein, mit der ein sogenanntes Negativbild entsteht, das wie ein Wasserzeichen aussieht und auch dessen Sicherheitsfunktion besitzt.

Bei einer vorteilhaften Ausgestaltung der Erfindung ist vorgesehen, daß die die Aluminiumteilchen enthaltende PVC-Lage mit einer weiß eingefärbten weiteren PVC-Lage hinterlegt ist.

Dadurch wird die Wirkung des Negativbildes noch weiter verstärkt.

Sehr vorteilhaft ist es auch, wenn erfindungsgemäß die mit Aluminiumteilchen versehene PVC-Lage durch eine Lage abgedeckt ist, welche ebenfalls aus PVC besteht und die ihrerseits durch Laserstrahlen markierbar ist.

In dieser Abdecklage wird durch die Laserstrahlen das eigentliche Bild erzeugt, während gleichzeitig in der darunterliegenden Lage das entsprechende Negativbild entsteht.

Vorteilhaft ist es auch, wenn erfindungsgemäß die Rückseite des Folienverbundes durch eine transparente PVC-Lage gebildet wird.

Eine weitere vorteilhafte Ausgestaltung der Erfindung liegt darin, daß die Aluminiumteilchen gelb eingefärbt sind.

Durch diese Einfärbung entsteht auf kostengünstige Weise der optische Eindruck einer Goldhinterlegung.

In der Zeichnung ist die Erfindung anhand eines Ausführungsbeispiels veranschaulicht. Die Figur zeigt einen Schnitt durch einen Folienverbund.

Mit 1 ist in der Fig. ein Folienverbund bezeichnet, der aus vier Lagen aufgebaut ist. Die oberste Lage 2 besteht aus PVC und ist mit Laserstrahlen markierbar, was durch Zugabe von geeigneten Mitteln erreichbar ist. Die unmittelbar darunter liegende Lage 3 besteht ebenfalls aus PVC und enthält Aluminiumteilchen 6 in Schliffform, die vor ihrer Zumischung zum PVC mit epoxiertem Sojabohnenöl angeteigt wurden. Als dritte Lage 4 ist dann eine weiß eingefärbte PVC-Lage vorgesehen, die an ihrer Unterseite durch eine transparente PVC-Lage 5 abgedeckt ist. Alle vier Lagen haben eine Stärke von etwa 200 μm und sind durch Heißverpressen miteinander verbunden. Zusätzlich ist es möglich, die Aluminiumteilchen 6 gelb einzufärben, wodurch der Eindruck einer Goldhinterlegung entsteht.

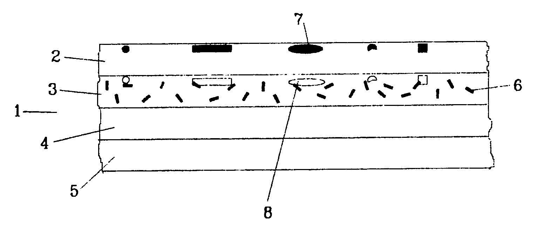

Beim Markieren dieses Folienverbundes mit Laserstrahlen wird in der Lage 2 ein Bild 7 erzeugt; gleichzeitig entsteht in der Lage 3 ein entsprechendes Negativbild 8, das wie ein Wasserzeichen aussieht.

## Ansprüche

1. Folienverbund zum Herstellen von ID-Karten od.dgl., die mit Laserstrahlen markierbar sind, **dadurch gekennzeichnet,** daß eine Lage(3) des Folienverbundes(1) aus PVC besteht und Aluminiumteilchen(6) enthält, die vor ihrer Zugabe zum PVC in epoxiertem Sojabohnenöl angeteigt sind.

2. Folienverbund nach Anspruch 1, **dadurch gekennzeichnet,** daß die die Aluminiumteilchen(6) enthaltende PVC-Lage(3) mit einer weiß eingefärbten weiteren PVC-Lage(4) hinterlegt ist.

3. Folienverbund nach Anspruch 1 od. 2, **dadurch gekennzeichnet,** daß die mit Aluminiumteilchen(6) versehene PVC-Lage(3) durch eine Lage(2) abgedeckt ist, welche ebenfalls aus PVC besteht und die ihrerseits durch Laserstrahlen markierbar ist.

4. Folienverbund nach einem der vorhergehenden Ansprüche, **dadurch gekennzeichnet,** daß die Rückseite des Folienverbundes durch eine transparente PVC-Lage(5) gebildet wird.

5. Folienverbund nach einem der vorhergehenden Ansprüche, **dadurch gekennzeichnet,** daß die Aluminiumteilchen(6) gelb eingefärbt sind.